# EUROPEAN PATENT SPECIFICATION

(11) **EP 0 730 610 B1**
(45) Date of publication and mention of the grant of the patent: **03.03.1999**
(21) Application number: 94930654.2
(22) Date of filing: 05.10.1994
(51) Int. Cl.: C08F 2/16, C08F 2/22

(54) **A MICROEMULSION POLYMERIZATION PROCESS**
MIKROEMULSIONS POLYMERIZATIONSVERFAHREN
PROCEDE DE POLYMERISATION EN MICROEMULSION

(30) Priority: 24.11.1993 US 157776; 11.08.1994 US 289152
(43) Date of publication of application: 11.09.1996
(73) Proprietor: W.L. GORE & ASSOCIATES, INC., Newark, Delaware 19714-9206 (US)
(72) Inventor: WU, Huey, Shen, Newark, DE 19711 (US); KALER, Eric, W., Newark, DE 19711 (US)
(74) Representative: Kador & Partner
(86) International application number: US9411399
(87) International publication number: WO9514715

(56) References cited:
- US-A- 4 645 783

## Description

### FIELD OF THE INVENTION

This invention relates to a process for microemulsion polymerization and the production of small colloidal polymeric particles made from a microemulsion of monomers.

### BACKGROUND OF THE INVENTION

Microemulsions are known in the art. They are stable isotropic mixtures of oil, water, and surfactant. They may contain other components such as alcohols or other amphiphilic molecules, or salts. The oil and water reside in distinct domains separated by an interfacial layer rich in surfactant. Because the domains of oil and water are small, microemulsions appear visually transparent or translucent, and are not birefringent. They form spontaneously upon contact of their components, and are equilibrium phases. Microemulsions can exist in the presence of other colloidal materials such as silica particles or latex particles. Such particles can either be added to the mixture or produced by chemical reactions within the microemulsion, as for example by polymerization.

Microemulsions can have a variety of microstructures, depending mainly on composition and temperature. The common structural feature is the presence of a surfactant-rich sheet separating oil-rich and water-rich domains. There are three most common structures. One is the so-called water-in-oil microemulsion, in which water is contained inside distinct domains (swollen inverted micelles or droplets) in a continuous oil-rich domain. A second is oil-in-water microemulsions, in which oil is contained inside distinct domains in a continuous water-rich domain. The third is bicontinuous microemulsions in which there are sample-spanning intertwined paths of both oil and water separated from each other by the surfactant-rich film.

A microemulsion can be distinguished from a conventional emulsion by its optical clarity, low viscosity, small domain size, thermodynamic stability and spontaneous formation. Moreover, polymerization of microemulsified monomers is advantageous because in contrast to bulk and solution polymerization, high reaction rates, high conversions and large molecular weights are achieved. Emulsion or microemulsion polymerization of unsaturated hydrocarbons, which are considered to be oils, is advantageous. Microemulsion polymerization of unsaturated hydrocarbons has been described in the literature. See for example U.S. Patent No. 5,234,807.

Microemulsions are formed in batch. The characteristic size in the microemulsion are generally of less than 0.1 micrometer (0.1 micron) in average size. The batch comprises the monomer to be polymerized, surfactant, water, initiator, and any other components such as cosurfactants, e.g. alcohols, which are used to fine tune the major surfactants. The reaction begins spontaneously after thermal or other initiation and proceeds to completion, at which time the majority of the monomer has been converted to polymer. After the reaction, the reactor contains polymer, any unreacted monomer, surfactant, and any other components originally present.

Microemulsion polymerization requires a high surfactant to monomer ratio. Because of the high surfactant concentrations typically required to microemulsify a given monomer, there are substantial amounts of surfactant remaining in the reaction vessel at the end of the reaction. Such high surfactant concentrations may be unwanted when the polymer produced is used for a number of purposes, such as coatings on substrates. For example, some polymers that can be produced by polymerization of microemulsions are fluorinated polymers, such as fluoroacrylates, and while these polymers impart good oleophobic properties to substrates coated with them, presence of surfactant in the coating is undesirable.

It would be desirable, therefore, to provide an improved method for microemulsion polymerization that would make more economical use of the surfactant and allow production of polymer dispersions of high polymer solids content with less surfactant in them.

### SUMMARY OF THE INVENTION

This invention provides a process for semi-batch microemulsion polymerization. The process involves initial preparation of a microemulsion containing at least one polymerizable monomer, surfactant, initiator, and water. Chemical reaction of the monomer produces polymer. Subsequently the reaction mixture is recharged with more monomer, and optionally with initiator and with a small amount of additional surfactant, water, or other ingredients, and additional polymerization carried out. The recharging and additional polymerization step can be repeated any number of times, thereby making a "semi-batch" process of increasing ratio of polymer to surfactant. After each recharging step, a microemulsion containing at least one monomer, surfactant, and water spontaneously forms in the presence of the colloidal polymer particles formed in the previous polymerization steps. The final resulting dispersion has a high polymer solids content and a low amount of surfactant present.

The resulting colloidal dispersions can be used to coat a variety of substrates. For example, with such small particles, the interiors of porous articles can be coated without significant diminuation of pore volume. Thus, the colloidal dispersions can be used to coat the pore walls, i.e., to coat the encompassing structure that defines the pores. The porous articles include knit fabrics, nonwoven fabrics or sheets, or polymeric materials including materials having pores from one side to the other, such as porous polytetrafluoroethylene, porous polyethylene, porous polypropylene, and in particular microporous structures of them.

By "porous" is meant that openings are provided that communicate from one side of the article to another. Thus, for films, the pores extend from one side to the other.

If desired, the resulting colloidal dispersions can be treated to coagulate the polymeric particles. The particles can then be stored and redissolved, when desired, in a suitable solvent and applied as a coating to various substrates.

The process of the invention can produce submicron colloidal polymer particles with a much smaller amount of surfactant present compared to single batch microemulsion polymerization. In the examples, it is demonstrated that small colloidal polymer particles, smaller than 0.1 micrometer (0.1 micron), e.g. 0.04, 0.06, and 0.08 micrometer (micron), can be produced with the final surfactant to polymer weight ratio between 1/4 to 1/7. This ratio is in the range of usage resulting from conventional emulsion polymerization, even though a microemulsion process ordinarily needs more surfactant.

### BRIEF DESCRIPTION OF THE DRAWING

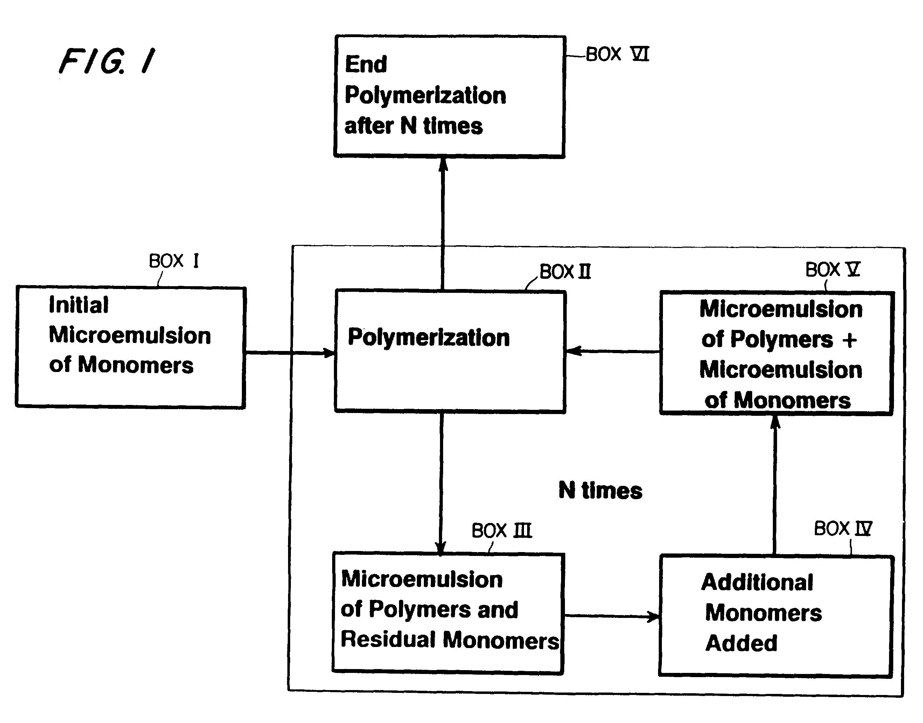

Figure 1 is a schematic outline of the process of the invention.

### DETAILED DESCRIPTION OF THE INVENTION

The preparation of the polymeric particles by the process of the invention depends on careful selection of the ingredients of the monomeric microemulsion from which the particles are made. Such microemulsion formulations employ water or other polar liquid, and surfactant. The polar liquids could be, for example, glycerol or formamide, or the like, but water is preferred. The monomer can be any monomer containing a polymerizable group. Preferably the monomer is an ethylenically unsaturated monomer. For example in one embodiment, the monomer can be represented by the formula: 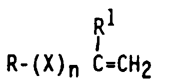 where
R¹ is H or CH₃ ;
X is 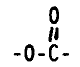 or -0-; and
R is hydrocarbyl or substituted hydrocarbyl, e.g. of 2-20 carbons; and
n is 0 or 1.

Examples include vinyl monomers, e.g. vinyl acetate, vinyl pyrollidone; acrylates or methacrylates, including fluorinated ones; styrene or substituted styrene, acrylamides, or the like.

Additional monomers can be present to make the polymer or copolymer. Such additional monomers include epoxides, carboxylic acids, amines, and the like, which have unsaturated moieties.

The surfactant can be any surfactant, e.g., anionic, cationic, zwitterionic or nonionic, and can be hydrogenated or fluorinated. Representative fluorinated surfactants include ones of the formula:

R_{f} R Y X,

where R_{f} is a perfluoroalkyl group or a perfluoroalkylether group with a carbon content of from 1 to 15 and preferably from 6 to 9 and R is for example an aklylene group or an alkylene thioether (-CH₂-S-CH₂-) linkage with a carbon content of from 0 to 4. For fluorinated anionic surfactants, Y is for example a carboxylate group (COO-), sulfonic group (SO₃-), or sulfate group (SO₄-) and X is an alkaline metal ion or ammonium ion. For fluorinated nonionic surfactants, Y is for example an oxyethylene (OCH₂CH₂)m linkage where m is an integer from 1 to 15 and preferably from 3 to 9 and X is a hydroxyl group. For fluorinated cationic surfactants, YX is for example a quaternary ammonium salt.

The general process is shown schematically in Figure 1. To make the initial microemulsion (Box I) in the first stage, ingredients are combined and the temperature of the monomeric microemulsion is adjusted to between 5 and 100°C, preferably 5 to 80°C. A free radical producing polymerization initiator can be added simultaneously with the other ingredients or can be added subsequently. Preferred initiators include persulfates, azo initiators, for example 2,2=azobis (2-amidopropane) dihydrochloride; peroxides, or photo initiators such as ultraviolet initiators or gamma ray initiators. Amounts of initiators present can range from 0.01 to 10 percent based on the monomer concentration.

Presence of the initiator causes the reaction to begin (Box II), and once begun the reaction is allowed to proceed. The resulting colloidal dispersion of polymer particle and residual monomer (Box III), has an average polymer particle size of between 0.01 and 0.1 micrometer (0.01 and 0.1 micron) and a polymer average molecular weight of over 10,000, preferably over 20,000 or 50,000. After this first stage of reaction is substantially complete, the reaction mixture is recharged with additional monomer (Box IV), and optionally with initiator, and optionally with additional surfactant, or water to form a microemulsion of monomer in the presence of the polymeric particles (Box V) Additional polymerization is carried out (Box II again). The recharging and subsequent reaction steps are repeated a number of times, thereby making a "semi-batch" process. After each recharging step, a microemulsion containing monomer, surfactant, and water forms in the presence of the colloidal polymer particles formed in the previous polymerization step. After the final recharging and reaction step, the resulting dispersion solution can be removed from the reactor (Box VI).

The resulting dispersion has a much higher polymer/surfactant ratio that the dispersion prepared after the initial polymerization, because the amount of polymer increases with every recharge and the ratio of surfactant to polymer is decreased with each recharge.

Monomer addition in each recharge is generally reduced from the previous recharge to avoid saturation of surfactant.

An advantage of the process of the invention is that very small polymeric particles (on the order of less than 0.1 micrometer (0,1 micron) average size) can be produced at a high solids content; greater than 10% solids by weight, and between 10% and 60% solids.

The polymer so produced can be isolated or can be coated directly from the colloidal dispersion onto a substrate.

### TEST PROCEDURES

### Particle Size Determination

Quasielastic light scattering was used to determine particle size. Polymer samples obtained as described in the examples were diluted with water to 100 times the original volume to eliminate interparticle interactions. Quasielastic light scattering cumulant functions were measured at 25°C with a Brookhaven Model 9000AT goniometer and correlator at a scattering angle of 90°. Correlation functions were fit to a two term cumulant expression to determine the apparent diffusion coefficient, which was assumed to correspond to the reported particle size via the Stokes-Einstein relation. The solvent viscosity was assumed to be that of water.

### EXAMPLES

### Example 1 - Preparation of Polymethylmethacrylate

In a one-liter glass reactor, 30 grams of methylmethacrylate, 45 grams of sodium dodecylsulfate, and 300 grams of distilled water were charged and sealed. The glass reactor was then immersed in a constant temperature bath at 75°C. With gentle magnetic stirring of the mixture at about 3.33 s⁻¹ (200 rpm) for about 30 minutes, the mixture became a one-phase clear microemulsion at 75°C. Stirring speed was maintained at about 3.33s⁻¹ (200 rpm) throughout the process. After the microemulsion formed, 0.30 gram of ammonium persulfate in 12 grams of distilled water was charged to the glass reactor to initiate free radical polymerization.

After about 15 minutes, the mixture was whitish and translucent, indicating that polymerization was occurring, and did not change appearance further with time. At this point, 29 grams of methylmethacrylate was charged to the mixture at 75°C to form a microemulsion presumably based on the excess surfactant available from the previous polymerization reaction. This was followed 5 minutes later by addition of 0.29 gram of ammonium persulfate in 12 grams of distilled water to the reactor to initiate the next batch polymerization.

After about 15 minutes, the mixture was whitish and translucent. Then 28 grams of methylmethacrylate was charged to the mixture at 75°C, followed 5 minutes later by addition of 0.28 gram of ammonium persulfate in 12 grams of distilled water to the reactor.

After about 15 minutes, the mixture was whitish and translucent. Then 27 grams of methylmethacrylate was charged to the mixture at 75°C, followed 5 minutes later by addition of 0.27 gram of ammonium persulfate in 12 grams of distilled water to the reactor.

After about 15 minutes, the mixture was whitish and translucent. Then 26 grams of methylmethacrylate was charged to the mixture at 75°C, followed 5 minutes later by addition of 0.26 gram of ammonium persulfate in 12 grams of distilled water to the reactor.

After about 15 minutes, the mixture was whitish and translucent. Then 25 grams of methylmethacrylate was charged to the mixture at 75°C, followed 5 minutes later by addition of 0.25 gram of ammonium persulfate in 12 grams of distilled water to the reactor.

After about 15 minutes, the mixture was whitish and translucent. Then 24 grams of methylmethacrylate was charged to the mixture at 75°C, followed 5 minutes later by addition of 0.24 gram of ammonium persulfate in 12 grams of distilled water to the reactor.

After about 15 minutes, the mixture was whitish and translucent. Then 23 grams of methylmethacrylate was charged to the mixture at 75°C, followed 5 minutes later by addition of 0.23 gram of ammonium persulfate in 12 grams of distilled water to the reactor.

After about 15 minutes, the mixture was whitish and translucent. Then 22 grams of methylmethacrylate was charged to the mixture at 75°C, followed 5 minutes later by addition of 0.22 gram of ammonium persulfate in 12 grams of distilled water to the reactor.

After about 15 minutes, the mixture was whitish and translucent. Then 21 grams of methylmethacrylate was charged to the mixture at 75°C, followed 5 minutes later by addition of 0.21 gram of ammonium persulfate in 12 grams of distilled water to the reactor.

After about 15 minutes, the mixture was whitish and translucent. Then 20 grams of methylmethacrylate was charged to the mixture at 75°C, followed 5 minutes later by addition of 0.20 gram of ammonium persulfate in 12 grams of distilled water to the reactor.

After about 15 minutes, the mixture was whitish and translucent. Then 19 grams of methylmethacrylate was charged to the mixture at 75°C, followed 5 minutes later by addition of 0.19 gram of ammonium persulfate in 12 grams of distilled water to the reactor.

After about 15 minutes, the mixture was whitish and translucent. Then 18 grams of methylmethacrylate was charged to the mixture at 75°C, followed 5 minutes later by addition of 0.18 gram of ammonium persulfate in 12 grams of distilled water to the reactor.

After about 15 minutes, the mixture was whitish and translucent. Then 17 grams of methylmethacrylate was charged to the mixture at 75°C, followed 5 minutes later by addition of 0.17 gram of ammonium persulfate in 12 grams of distilled water to the reactor.

After about 15 minutes, the mixture was whitish and translucent. Then 16 grams of methylmethacrylate was charged to the mixture at 75°C, followed 5. minutes later by addition of 0.16 gram of ammonium persulfate in 12 grams of distilled water to the reactor.

The mixture was maintained at 75°C for one hour and reaction was then stopped by cooling the mixture to room temperature. The final dispersion was translucent, with a particle size of about 82 nanometer (0.082 micrometer (0.082 micron)) as determined by the quasielastic light scattering method.

The final weight ratio of polymer produced to surfactant is about 7.5:1, compared to 2:3 in the initial polymerization batch. Polymer solids content was about 39% by weight of dispersion.

### Example 2 - Polystyrene

in a one-liter glass reactor, 30 grams of styrene monomer, 60 grams of dodecyltrimethylammonium bromide, and 300 grams of distilled water were charged and sealed. The glass reactor was then immersed in a constant temperature bath at 80°C. With a gentle stirring of the mixture at about 3.33 s⁻¹ (200 rpm) for about 30 minutes, the mixture became a one-phase clear microemulsion at 80°C. Stirring speed was maintained at about 3.33 s⁻¹ (200 rpm) throughout the process. Then 0.20 gram of 2,2-azobis(2-methylpropionamidine) dihydrochloride (V-50 from Wako Chemical) in 12 grams of distilled water was charged to the glass reactor to initiate free radical polymerization.

After about 15 minutes, the mixture was whitish and translucent and did not change appearance further with time. At this point, 29 grams of styrene was charged to the mixture at 80°C to form a microemulsion, presumably using the excess surfactant available from the previous polymerization reaction. This was followed 5 minutes later by addition of 0.29 gram of V-50 in 12 grams of distilled water to initiate the next batch polymerization.

After about 15 minutes, the mixture was whitish and translucent. Then 28 grams of styrene was charged to the mixture at 80°C, followed 5 minutes later with the addition of 0.28 gram of V-50 in 20 grams of distilled water to the reactor.

After about 15 minutes, the mixture was whitish and translucent. Then 27 grams of styrene was charged to the mixture at 80°C, followed 5 minutes later with the addition of 0.27 gram of V-50 in 20 grams of distilled water to the reactor.

After about 15 minutes, the mixture was whitish and translucent. Then 26 grams of styrene was charged to the mixture at 80°C, followed 5 minutes later with the addition of 0.26 gram of V-50 in 20 grams of distilled water to the reactor.

After about 15 minutes, the mixture was whitish and translucent. Then 25 grams of styrene was charged to the mixture at 80°C, followed 5 minutes later with the addition of 0.25 gram of V-50 in 20 grams of distilled water to the reactor.

After about 15 minutes, the mixture was whitish and translucent. Then 24 grams of styrene was charged to the mixture at 80°C, followed 5 minutes later with the addition of 0.24 gram of V-50 in 20 grams of distilled water to the reactor.

After about 15 minutes, the mixture was whitish and translucent. Then 23 grams of styrene was charged to the mixture at 80°C, followed 5 minutes later with the addition of 0.23 gram of V-50 in 20 grams of distilled water to the reactor.

After about 15 minutes, the mixture was whitish and translucent. Then 22 grams of styrene was charged to the mixture at 80°C, followed 5 minutes later with the addition of 0.22 gram of V-50 in 20 grams of distilled water to the reactor.

After about 15 minutes, the mixture was whitish and translucent. Then 21 grams of styrene was charged to the mixture at 80°C, followed 5 minutes later with the addition of 0.21 gram of V-50 in 20 grams of distilled water to the reactor.

The mixture was maintained at 80°C for one hour, and reaction was then stopped by cooling the mixture to room temperature. The final dispersion is translucent, with particle sizes of about 60 nanometer (0.060 micrometer (0.060 micron)) as determined by the quasielastic light scattering method described previously. The final polymer to surfactant weight ratio is about 4:1, compared to the initial batch ratio of 1:2. Polymer solids content was about 29% by weight.

### Example 3 - Polyfluoroalkylacrylate

In a one-liter glass reactor, 30 grams of fluoroalkylacrylate (Zonyl TA-N, DuPont), 45 grams of ammonium perfluorooctanoate (3M), and 300 grams of distilled water were charged and sealed. The glass reactor was then immersed in a constant temperature bath at 80°C. With gentle stirring of the mixture at about 3.33 s⁻¹ (200 rpm) for about 30 minutes, the mixture became a one-phase clear microemulsion at 80°C. Stirring speed was maintained at about 3.33 s⁻¹ (200 rpm) throughout the process. Then 0.30 gram of ammonium persulfate (APS) in 12 grams of distilled water was charged to the glass reactor to initiate free radical polymerization.

After about 15 minutes, the mixture remained transparent. Then 29 grams of TA-N was charged to the mixture at 80°C to form a microemulsion with the excess surfactant available from the previous polymerization reaction, following with an addition of 0.29 gram of APS in 12 grams of distilled water to the reactor 5 minutes later to initiate the next batch polymerization.

After about 15 minutes, the mixture remained transparent. Then 28 grams of TA-N was charged to the mixture at 80°C, following with an addition of 0.28 gram of APS in 12 grams of distilled water to the reactor 5 minutes later.

After about 15 minutes, the mixture remained transparent. Then 27 grams of TA-N was charged to the mixture at 80°C, following with an addition of 0.27 gram of APS in 12 grams of distilled water to the reactor 5 minutes later.

After about 15 minutes, the mixture remained transparent. Then 26 grams of TA-N was charged to the mixture at 80°C, following with an addition of 0.26 gram of APS in 12 grams of distilled water to the reactor 5 minutes later.

After about 15 minutes, the mixture remained transparent. Then 25 grams of TA-N was charged to the mixture at 80°C, following with an addition of 0.25 gram of APS in 12 grams of distilled water to the reactor 5 minutes later.

After about 15 minutes, the mixture remained transparent. Then 24 grams of TA-N was charged to the mixture at 80°C, following with an addition of 0.24 gram of APS in 12 grams of distilled water to the reactor 5 minutes later.

After about 15 minutes, the mixture remained transparent. Then 23 grams of TA-N was charged to the mixture at 80°C, following with an addition of 0.23 gram of APS in 12 grams of distilled water to the reactor 5 minutes later.

After about 15 minutes, the mixture remained transparent. Then 22 grams of TA-N was charged to the mixture at 80°C, following with an addition of 0.22 gram of APS in 12 grams of distilled water to the reactor 5 minutes later.

After about 30 minutes, the mixture remained transparent. However, about 11 grams of polymer precipitated, and this solid polymer was removed. Then 21 grams of TA-N was charged to the mixture at 80°C, following with an addition of 0.21 gram of APS in 12 grams of distilled water to the reactor 5 minutes later.

After about 30 minutes, the mixture remained transparent. However, about 18 grams of polymer precipitated, and this solid polymer was removed. Then 15 grams of TA-N was charged to the mixture at 80°C, following with an addition of 0.15 gram of APS in 12 grams of distilled water to the reactor 5 minutes later.

The mixture was maintained at 80°C for one hour and the reaction was stopped by cooling the mixture to room temperature. About 15 grams of polymer precipitated, and this solid polymer was removed. The final dispersion is a transparent microemulsion, with particle sizes of about 0.040 micrometer (0.040 micron) as determined by the quasielastic light scattering method previously described.

It was obvious that in the last three batch processes of this example that there was not enough surfactant available to microemulsify the monomer added in each step. Thus the monomer, when polymerized, did not yield a stable dispersion and instead precipitated. This is especially clear in the last batch process in which 15 grams of monomer was charged and 15 grams of solid polymer precipitated. This result indicates that the mixture in the reactor has reached its full capacity of microemulsification. The final weight ratio of polymer to surfactant weight ratio is about 5:1, compared to the initial batch ratio of 2:3. Polymer solids content was about 32% by weight.

## Claims

1. A microemulsion polymerization process comprising:
(a) forming a microemulsion by combining a polymerizable monomer, surfactant and polar solvent and initiating polymerization by adding an initiator for initiating free radical polymerization to form a colloidal dispersion of polymer particles of an average particle size of between 0.01 and 0.1 micrometer (0.01 and 0.1 micron) ;
(b) adding additional monomer to form a new microemulsion of monomer in the dispersion prepared in step (a) in order to achieve a higher polymer to surfactant ratio in the final polymer dispersion than in the dispersion obtained after the initial polymerization, and initiating additional polymerization.

2. The process of Claim 1 in which step (b) is repeated at least once, preferably at least twice and more preferably at least ten times.

3. The process of Claim 1 or 2 wherein the polar solvent is water.

4. The process of Claim 1 or 2 wherein the polymerizable monomer is ethylenically unsaturated.

5. The process of Claim 1, 2, 3 or 4 comprising:
(a1) forming a microemulsion by combining ethylenically unsaturated organic monomer of the formula: 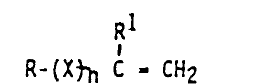 where
R¹ is H or CH₃ ;
X is 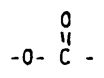 or -0- ; and
R is hydrocarbyl or substituted hydrocarbyl; and
n is 0 or 1.
surfactant and water, in an amount of 1 to 30 weight percent monomer and 0.1 to 60 weight percent surfactant based on total components, to form a microemulsion; and initiating polymerization by adding 0.01 to 10 weight percent of an initiator for initiating free radical polymerization, based on monomer concentration;
(a2) allowing polymerization to proceed to form a colloidal dispersion of polymer particles;
(b) adding additional monomer in an amount of between 0.1 and 30 weight percent based on the preceding polymerization mixture, to form a new microemulsion of monomer in the dispersion prepared in step (a2) in order to achieve a higher polymer to surfactant ratio in the final polymer dispersion than in the dispersion obtained after the initial polymerization, and initiating additional polymerization.

## Patentansprüche

1. Mikroemulsionspolymerisationsverfahren, das
(a) das Bilden einer Mikroemulsion durch Vereinigen eines polymerisierbaren Monomers, eines Tensids und eines polaren Lösungsmittels und das Initiieren der Polymerisation durch Zugabe eines Initiators zum Initiieren der radikalischen Polymerisation, um eine kolloide Dispersion von Polymerpartikeln einer mittleren Partikelgröße zwischen 0,01 und 0,1 Mikrometer (0,01 und 0,1 µm) zu bilden;
(b) die Zugabe eines zusätzlichen Monomers, um eine neue Mikroemulsion eines Monomers in der in Schritt (a) hergestellten Dispersion zu bilden, um ein höheres Verhältnis Polymer zu Tensid in der Endpolymerdispersion als in der nach der Ausgangspolymerisation erhaltenen Dispersion zu erzielen, und das Initiieren weiterer Polymerisation,
umfaßt.

2. Das Verfahren gemäß Anspruch 1, dadurch gekennzeichnet, daß Schritt (b) wenigstens einmal, vorzugsweise wenigstens zwei- und mehrmals, vorzugsweise wenigstens zehnmal wiederholt wird.

3. Das Verfahren gemäß Anspruch 1 oder 2, dadurch gekennzeichnet, daß das polare Lösungsmittel Wasser ist.

4. Das Verfahren gemäß Anspruch 1 oder 2, dadurch gekennzeichnet, daß das polymerisierbare Monomer ethylenisch ungesättigt ist.

5. Das Verfahren gemäß Anspruch 1, 2, 3 oder 4, dadurch gekennzeichnet, daß es
(a) das Bilden einer Mikroemulsion durch Vereinigen von ethylenisch-ungesättigtem organischen Monomer der Formel: 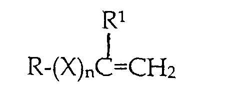
worin R1 H oder CH3 ist; 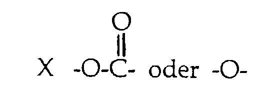 ist; und
R ein Kohlenwasserstoff-Rest oder substituierter Kohlenwasserstoff-Rest ist, zum Beispiel mit 2 bis 20 Kohlenstoffatomen; und
n 0 oder 1 ist,
Tensid und Wasser in einer Menge von 1 bis 30 Gewichtsprozent Monomer und 0,1 bis 60 Gewichtsprozent Tensid, basierend auf den Gesamtkomponenten, um eine Mikroemulsion zu bilden, und Initiieren einer Polymerisation durch Zugabe von 0,01 bis 10 Gewichtsprozent eines Initiators, basierend auf der Monomerkonzentration, zum Initiieren der radikalischen Polymerisation;
(a2) das Zulassen des Fortschreitens der Polymerisation, um eine kolloide Dispersion der Polymerpartikel zu bilden;
(b) die Zugabe weiteren Monomers in einer Menge zwischen 0,1 und 30 Gewichtsprozent, basierend auf dem vorhergehenden Polymerisationsgemisch, um eine neue Mikroemulsion eines Monomers in der in Schritt (a2) hergestellten Dispersion zu bilden, um ein höheres Verhältnis Polymer zu Tensid in der Endpolymerdispersion als in der nach der Ausgangspolymerisation erhaltenen Dispersion zu erzielen, und das Initiieren weiterer Polymerisation,
umfaßt.

## Revendications

1. Procédé de polymérisation en émulsion comprenant les étapes consistant à :
(a) former une microémulsion en combinant un monomère polymérisable, un agent tensioactif et un solvant polaire, et initier la polymérisation en ajoutant un initiateur pour initier la polymérisation radicalaire et former une dispersion colloïdale de particules de polymère d'une taille moyenne de particules comprise entre 0,01 et 0,1 micromètres (0,01 et 0,1 µm);
(b) ajouter du monomère initial pour former une nouvelle microémulsion de monomère dans la dispersion préparée à l'étape (a) pour obtenir un rapport polymère sur tensioactif plus élevé dans la dispersion finale de polymère que dans la dispersion obtenue après la polymérisation initiale, et initier la polymérisation supplémentaire.

2. Procédé selon la revendication 1, dans lequel on répète l'étape (b) au moins une fois, de préférence au moins deux fois et plus, de préférence au moins dix fois.

3. Procédé selon la revendication 1 ou 2, dans lequel le solvant polaire est l'eau.

4. Procédé selon la revendication 1 ou 2, dans lequel le polymère polymérisable est éthyléniquement insaturé.

5. Procédé selon la revendication 1, 2, 3 ou 4 comprenant les étapes consistant à :
(a1) former une microémulsion en combinant un monomère organique éthyléniquement insaturé de formule : 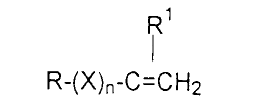 dans laquelle
R¹ est H ou CH₃;
X est 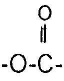 ou -O-; et
R est un groupe hydrocarbyle ou hydrocarbyle substitué; et
n est 0 ou 1,
un agent tensioactif et de l'eau, en une quantité de 1 à 30 pour cent en poids de monomère et de 0,1 à 60 pour cent en poids de tensioactif sur la base du total des composés, pour former une microémulsion; et initier la polymérisation en ajoutant 0,01 à 10 pour cent en poids, sur la base de la concentration en monomère, d'un initiateur pour initier la polymérisation radicalaire;
(a2) réaliser la polymérisation pour former une dispersion colloïdale de particules de polymère;
(b) ajouter du monomère supplémentaire en une quantité comprise entre 0,1 et 30 pour cent en poids, sur la base du mélange de polymérisation précédent, pour former une nouvelle microémulsion de monomère dans la dispersion préparée à l'étape (a2) pour obtenir un rapport polymère sur tensioactif plus élevé dans la dispersion finale de polymère que dans la dispersion obtenue après la polymérisation initiale, et initier la polymérisation supplémentaire.
